# EUROPEAN PATENT APPLICATION

(11) **EP 4 837 729 A1**
(43) Date of publication of application: **11.11.2026**
(21) Application number: 26172955.2
(22) Date of filing: 17.04.2026
(51) Int. Cl.: B29C 65/36, B29C 65/78, B65B 51/22, B29L 31/00, B29L 31/32, B29K 705/02

(54) **SEALING SYSTEM FOR SEALING A TUBE OF PACKAGING MATERIAL FOR THE PRODUCTION OF PACKAGES CONTAINING A POURABLE PRODUCT**

(30) Priority: 08.05.2025 IT 202500010338
(71) Applicant: Tetra Laval Holdings & Finance S.A., 1009 Pully (CH)
(72) Inventor: ALGERI, Pierpaolo, 41123 MODENA (IT)
(74) Representative: Tetra Pak Patent Attorneys

(57) **Abstract**

A sealing system (8) configured to longitudinally seal a tube (3) of packaging material comprises a support frame (10), an inductor device for inducing a current in a conductive layer of the packaging material, a roller assembly (15) for supporting the packaging material during the induction-heating and a holder (17) for mechanically coupling the roller assembly (15) to the support frame (10).

The roller assembly (15) comprises a recess (18), while the holder (17) includes a pin (19) configured to engage the recess (18) for fixing the roller assembly (15) to the holder (17).

## Description

### TECHNICAL FIELD

The present invention relates to a sealing system for sealing a tube of packaging material for the production of packages containing a pourable product, preferably a pourable food product.

### BACKGROUND ART

As it is generally known, many pourable food products, such as fruit juice, UHT (ultra-high temperature-treated) milk, wine, tomato sauce, etc., are sold in packages made of sterilized packaging material.

A typical example is the parallelepiped-shaped package for pourable food products known as Tetra Brik Aseptic (registered trademark), which is made by folding and sealing a laminated web of packaging material.

The packaging material has a multilayer structure comprising a base layer, e.g. made of paper, covered on both sides with layers of heat-sealable material, e.g. polyethylene.

In the case of aseptic packages for long-storage products, such as UHT milk, the packaging material also comprises a layer of oxygen-barrier material, e.g. an aluminum foil, which is superimposed on a layer of heat-seal plastic material, and is in turn covered with another layer of heat-sealable material forming the inner face of the package eventually contacting the food product.

Packages of this sort are normally produced on fully automatic packaging machines, which form and fill the packages starting from a multilayer web of packaging material.

In particular, the web of packaging material is initially wound in a reel and fed through a plurality of unwinding rollers.

The web of packaging material is typically maintained in a closed, sterile environment, and, while advanced by the aforementioned unwinding rollers, is folded to form a continuous tube by means of a known web folding device. The tube is then sealed longitudinally, i.e. it is provided with a continuous longitudinal seal.

In order to perform the package forming operations, the tube is continuously fed along a straight vertical direction, is filled with the sterilized food product from above and is formed, sealed and subsequently cut along equally spaced transversal cross-sections extending along a direction orthogonal to the vertical direction.

So-called pillow packs are obtained thereby, which have a longitudinal sealing band, a top transversal sealing band and a bottom transversal sealing band. The pillow packs are then cut at the cross-sections to be separated from one another and directed to a folding unit of the packaging machine for the final folding thereof.

The finished packages are thereby obtained.

In order to form the tube, the web folding device is configured to progressively fold the web from a sheet-like configuration to a C-shaped configuration and then into a substantially tubular shaped configuration whereby a first longitudinal edge of the web is partially superimposed on a second longitudinal edge of the web.

In detail, the web folding device usually includes a plurality of folding rollers arranged so as to define a number of (usually two) passages for the packaging material varying gradually in section from a C shape to a circular shape.

In order to provide the tube with the aforementioned longitudinal seal, the packaging machine comprises a sealing system configured to interact with the tube so as to seal the first longitudinal edge and the second longitudinal edge together.

In particular, the sealing system is configured to perform a heating step and a pressing step on the tube.

To this end, the sealing system includes a heating device arranged adjacent to an outer surface of the tube, and in particular to the region of the tube at which the first longitudinal edge is superimposed onto the second longitudinal edge. The heating device is configured to locally heat up such region.

The sealing system further includes a presser roller (or pressure roller) arranged downstream the heating device and facing one of the aforementioned folding rollers.

In detail, the presser roller is arranged inside the tube in formation, while the one folding roller is arranged outside the tube in formation.

The presser roller is configured to carry out the pressing step.

That is, the aforementioned region of the tube advances in between the presser roller and the relative folding roller, thereby being pressed against such folding roller by the presser roller.

According to a known solution, in order to perform the aforementioned heating step, the presence of the aluminum layer is exploited.

In detail, the sealing system comprises an inductor device configured to heat the aforementioned region of the tube by induction-heating, i.e. heating through electromagnetic induction, the aluminum layer, which is a conductive layer.

In greater detail, the inductor device is arranged in the vicinity of the downward-moving tube and is electrically powerable to produce or generate an electromagnetic induction field at an operative area (or active area) defined by the inductor device itself, for inducing a current (and heating)in the aluminum layer of the packaging material, thereby causing a localized melting of the outer layer of heat-sealable (plastic) material.

More specifically, the electromagnetic field produced by the inductor device defines a magnetic flux which hits the packaging material of the tube and interacts with the conductive aluminum layer thereof.

Therefore, according to a well-known process, a current is induced in the conductive layer, which ultimately heats up (by Joule effect).

It is known that, in order to be optimally effective, the inductor device must be arranged at a predetermined distance from the packaging material, i.e. from the outer surface of the tube.

On the other hand, it must be ensured that the packaging material does not contact and slide on the outer surface of the inductor device, so as to reach the optimal effectiveness of the magnetic field and avoid wear or damage (e.g. scratches) of the packaging material or of the inductor active surface (which faces the tube and is often provided with a protective coating).

To this end, the sealing system includes a plurality of idle rollers, which are arranged at the operative area with their respective axes orthogonal to the advancing direction of the tube and protrude from the active surface of the inductor device.

In this way, the packaging material advancing downwards cooperates in touch with the rollers at their tangency and is arranged at not less than a specific distance (i.e. the protruding distance of the rollers from the active surface) from the inductor device.

The inductor device is fixed to a support frame of the sealing system, which is in turn mounted to a fixed frame of the packaging machine.

In order to avoid hindering the magnetic flux, the rollers are not directly fixed to the inductor device.

Instead, the sealing system comprises holders which are mounted to the support frame and carry, each, at least one roller.

In order to limit the aforementioned hindering of the magnetic flux, the need is known for avoiding the presence of ferromagnetic material in the operative area defined by the inductor device.

To this end, according to a known solution screws made of non-magnetic material, usually plastic, are used both to fix the rollers to the respective holders and to fix the holders to the support frame.

Although the known packaging machines and sealing systems thereof are structurally and functionally valid, the Applicant has observed that they are still open to further improvement, in particular as per easing and, at the same time, making robust and effective the assembly of the rollers and holders to the support frame without compromising the efficacy of the generated electromagnetic induction field, and as per simplifying the maintenance of the sealing system.

### DISCLOSURE OF INVENTION

It is therefore an object of the present invention to provide a sealing system for sealing a tube of packaging material which is designed to meet the above-mentioned needs in a straightforward and low-cost manner.

This object is achieved by a sealing system as claimed in the appended independent claim 1. Preferred embodiments of the present invention are laid down in the appended dependent claims.

### BRIEF DESCRIPTION OF THE DRAWINGS

A non-limiting embodiment of the present invention will be described by way of example with reference to the accompanying drawings, in which:
Figure 1 is a schematic perspective view, with parts removed for clarity, of a packaging machine including a sealing system according to the present invention;
Figure 2a is a larger-scale perspective view, with parts removed for clarity, of the sealing system of Figure 1;
Figure 2b is a larger-scale detail of Figure 2a;
Figure 3a is a larger-scale perspective view, with parts removed for clarity, of a region of the sealing system according to the invention;
Figure 3b is a larger-scale detail of Figure 3a;
Figure 4 is a sectioned top view, with parts removed for clarity, of the region of the sealing system shown in Figure 3a;
Figure 5 is an exploded perspective view of the sealing system.

### BEST MODE FOR CARRYING OUT THE INVENTION

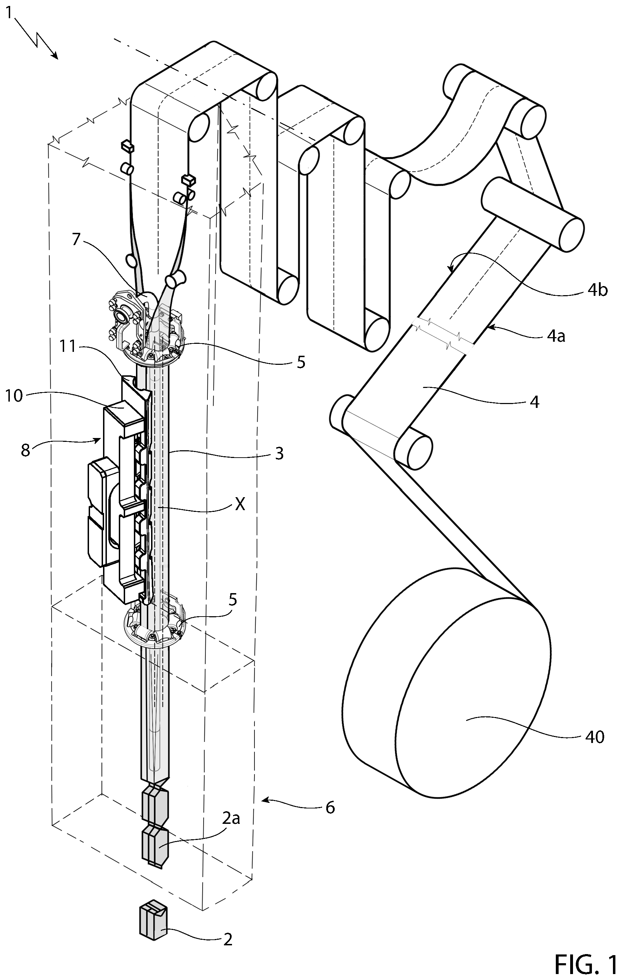

With reference to Figure 1, number 1 indicates as a whole a non-limiting example of a packaging machine configured for producing sealed packages 2 containing a pourable product, preferably a pourable food product such as pasteurized or UHT milk, water, fruit juice, wine, peas, beans, etc.

In detail, packaging machine 1 is configured to form, seal and fold packages 2 starting from a web 4 of packaging material, which is initially wound in a reel 40, and then folded into a tube 3 of packaging material, according to a manner known and not described in detail.

Web 4 of packaging material has a multilayer structure (not shown), and comprises a layer of fibrous material, e.g. paper, covered on both sides with respective layers of heat-sealable material, e.g. polyethylene.

Moreover, with the purpose of producing aseptic packages 2 for long-storage products, such as UHT milk, web 4 also comprises a layer of gas-and-light barrier material, preferably an aluminum foil, which is superimposed on a layer of heat-sealable material, and is in turn covered with another layer of heat-sealable material, the latter forming the inner face of package 2 eventually contacting the pourable product.

In detail, such layer of gas-and-light barrier material is a conductive layer made of an electrically conductive material, as said preferably aluminum.

As schematically shown in Figure 1, packaging machine 1 comprises a conveying device, for example including a plurality of unwinding rollers, configured to advance the web 4 along an advancement path.

Packaging machine 1 comprises a web folding device 5 for progressively folding the advancing web 4 into a tube 3 of packaging material.

In particular, in order to form tube 3, web folding device 5 is configured to progressively fold web 4 from a sheet-like configuration to a C-shaped configuration and then into a substantially tubular shaped configuration whereby a first longitudinal edge 4a of web 4 is partially superimposed on a second longitudinal edge 4b of web 4.

In detail, web folding device 5 defines at least one through passage, preferably two as visible in Figure 1, for web 4 and is configured to interact with web 4 so as to progressively bend and fold web 4 into a tubular shape, in a manner known and not described in detail.

Preferably, packaging machine 1 comprises a sterilization unit (not shown) configured for applying a sterilizing agent, for example containing hydrogen peroxide, on web 4 prior to its folding into tube 3.

Packaging machine 1 comprises a forming and sealing unit 6 (only schematically shown) for forming tube 3 by imparting a predetermined external shape, corresponding to a precursor of the shape of package 2, to successive longitudinal portions of tube 3, and for sealing tube 3 at equally spaced cross-sections thereof (according to a manner known and not described in detail).

Packaging machine 1 comprises a filling system 7 (only partially shown) configured to fill tube 3 with the pourable product.

Preferably, forming and sealing unit 6 has a longitudinal axis X along which tube 3 is fed, in use.

In particular, such longitudinal axis X is parallel to a straight direction, which preferably is a straight vertical direction, as schematized in Figure 1.

Hence, in use, tube 3 is fed along the longitudinal axis X, downwards, and while being filled from above is formed and sealed by forming and sealing unit 6, according to a manner known and not described in detail.

More specifically, tube 3 is drawn (downwards) along the longitudinal axis X by forming and sealing unit 6 in a known manner.

In this way, a plurality of pillow packs 2a are obtained.

Packaging machine 1 further comprises a folding unit (known per se and not shown) for folding the pillow packs 2a, thereby obtaining packages 2, according to a manner known and not described in detail.

Packaging machine 1 further comprises a sealing system 8 configured for longitudinally sealing tube 3, i.e. configured for providing tube 3 with a longitudinal seal.

The sealing system 8 comprises:
- a support frame 10;
- an inductor device 11 configured to heat the packaging material by induction-heating.

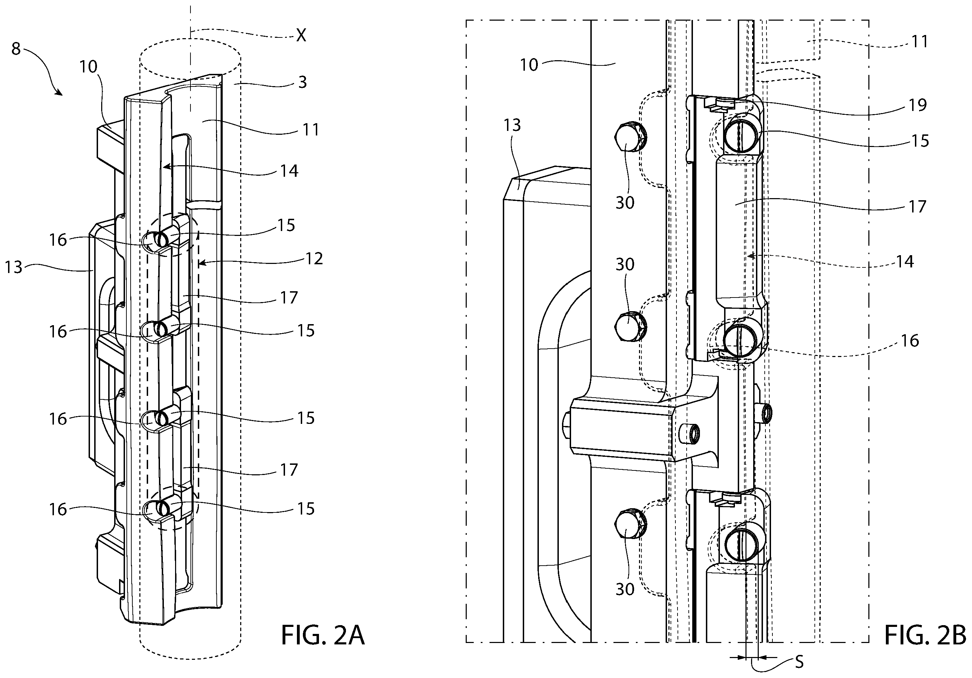

In detail, the inductor device 11 is configured to produce or generate an electromagnetic induction field, thereby defining an operative area 12 thereof (Figure 2a). The electromagnetic induction field is configured to induce a current in the conductive layer. In particular, the electromagnetic induction field is configured for continuously heating the packaging material at said operative area 12 by induction-heating the conductive layer.

To this end, the inductor device 11 is configured to be electrically powered or energized so as to produce and/or emit the electromagnetic induction field within the operative area 12.

More precisely, the operative area 12 defines an active area of the inductor device 11, within which the generated electromagnetic induction field is effective or most effective.

The zone of the packaging material (of the tube 3 or of the web 4) advancing through the operative area 12 is immersed in the electromagnetic induction field.

This zone of packaging material includes the superimposition zone at which the first longitudinal edge 4a is superimposed on the second longitudinal edge 4b.

Therefore, the conductive (aluminum) layer of such zone of the packaging material interacts with the electromagnetic induction field: induced currents establish thereat, heating the conductive layer by Joule effect.

Consequently, the other layers of the packaging material heat up; especially, the heat-sealable layers of the first longitudinal edge 4a and second longitudinal edge 4b heat up, so that the material melts and fuses the edges 4a, 4b with one another.

The longitudinal seal is thereby obtained.

In one embodiment, the inductor device 11 is mounted to the support frame 10, which may be in turn mounted to a fixed frame 13 of packaging machine 1.

Alternatively, the inductor device is directly mounted to fixed frame 13.

In order to maximize the effectiveness of the induction heating, the inductor device 11 is arranged in the vicinity of the downward-moving packaging material, e.g. in the vicinity of the downward-moving tube 3.

In particular, the inductor device 11 comprises an active surface 14 which faces, in use, the aforementioned zone of the packaging material and which is arranged at a predetermined distance from the packaging material, preferably from the outer surface of the tube 3 at which the first longitudinal edge 4a and second longitudinal edge 4b are superimposed.

The aforementioned predetermined distance ensures that the induction heating is optimally effective.

Sealing system 8 further comprises at least one, and in particular a plurality of roller assemblies 15 which are arranged at the operative area 12 with their respective axes transversal, and preferably orthogonal, to the advancing direction of the tube 3 and protrude from the active surface 14 of the inductor device 11.

In detail, the inductor device 11 includes at least one recess 16, and in particular one recess 16 for each roller assembly 15.

Each roller assembly 15 is partially housed in the respective recess 16, i.e. engages the respective recess 16, and protrudes from the active surface 14 in direction of the tube 3 by a distance S (Figure 2b).

The roller assemblies 15 support the packaging material in advancement and avoid that the packaging material contacts the active surface 14 while advancing downwards.

In this way, it is ensured that the packaging material does not contact and slide on the active surface 14 of the inductor device 11, so as to reach the optimal effectiveness of the magnetic field and, at the same time, avoid wear or damage (e.g. scratches) of the packaging material or of the active surface 14 itself.

In light of the above, roller assemblies 15 support the packaging material from outside, and in particular cooperate with the outer surface of the tube 3.

In a preferred embodiment, the roller assemblies 15 are idle, i.e. are freely rotatable and carried in rotation by the contact cooperation with the advancing packaging material.

Roller assemblies 15 support the packaging material during the induction-heating thereof.

The sealing system 8 further comprises at least one, and in particular a plurality of holders 17 configured for mechanically coupling the roller assemblies 15 to the support frame 10.

According to the non-limiting embodiment shown, sealing system 8 comprises four roller assemblies 15 and two holders 17, each holder 17 carrying two roller assemblies 15.

Hence, each roller assembly is mounted to a respective holder 17.

Alternatively, the sealing system 8 may comprise a different number of roller assemblies 15, preferably at least two so as to ensure proper support of the packaging material during induction heating.

For the sake of brevity and simplicity, reference will be made in the following to a single holder 17 and to a single roller assembly 15 partially housed in a respective recess 16 of the inductor device 11. However, the structural and functional features described hereinafter are equally applicable to all roller assemblies 15 and holders 17 which may be present in sealing system 8.

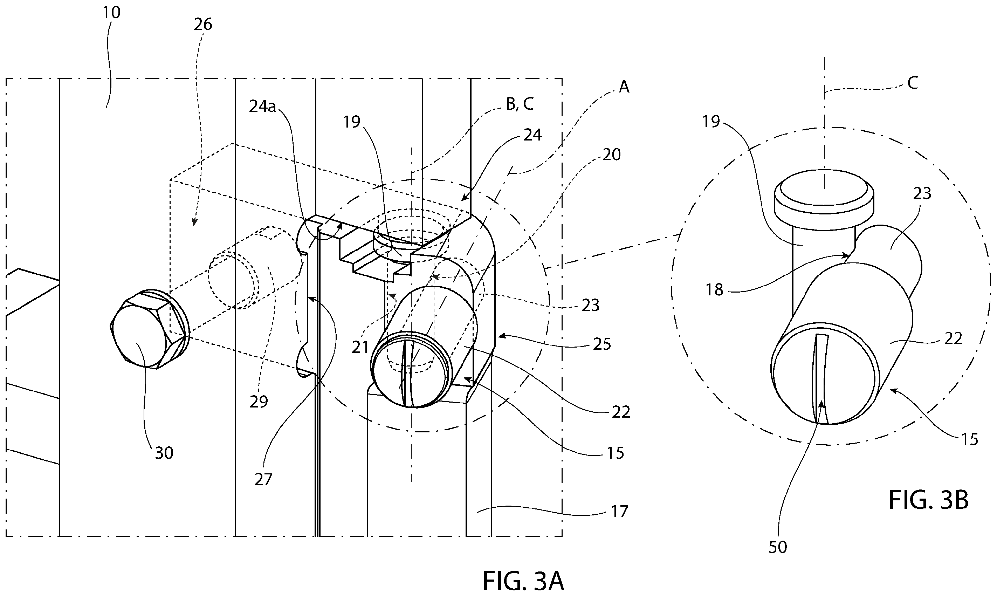

According to an important aspect of the present invention, the roller assembly 15 comprises a recess 18 (visible in particular in Figure 3b)and the holder 17 includes a pin 19 configured to engage the recess 18 for fixing the roller assembly 15 to the holder 17.

In particular, the holder 17 includes a first holder seat 20 and a second holder seat 21 (Figure 3a).

The roller assembly 15 is mounted, i.e. fixed, to the holder 17 by engaging the first holder seat 20 and the pin 19 engages the second holder seat 21.

In this way, the roller assembly 15 is fixed to the holder 17, as better explained below.

Advantageously, the first holder seat 20 and the second holder seat 21 interpenetrate one another so that:
- the recess 18 is located both in the first holder seat 20 and in the second holder seat 21;
- the pin 19 engages partially the first holder seat 20 for engaging the recess 18.

In other words, the pin 19 engages the second holder seat 21 and at the same time the recess 18 previously inserted in the first holder seat 20.

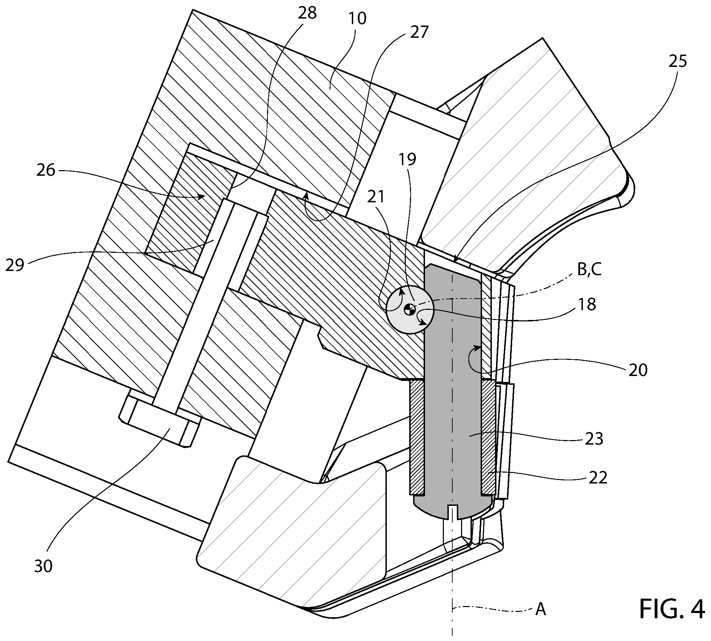

This is shown in particular in Figures 3a and 4.

In other words, the pin 19 locks the roller assembly 15 to the holder 17 by engaging the recess 18 thereof, in a preferred manner that will be better explained in the following.

According to the preferred embodiment shown, the roller assembly 15 comprises a hollow rolling member 22 and a central shaft 23 which engages the rolling member 22 thereby carrying the rolling member 22.

More precisely, the rolling member 22 is rotatably coupled to the central shaft 23.

That is, the rolling member 22 is freely rotatable with respect to the central shaft 23.

For each roller assembly 15, it is the rolling member 22 which partially engages the recess 16 of the inductor device 11 protruding from the active surface 14 thereof, and which supports the packaging material during the induction heating thereof.

Instead, the central shaft 23 is rotatably fixed and it is fixed to the holder 17.

The aforementioned recess 18 of the roller assembly 15 is obtained on the central shaft 23, and in particular to a portion of the central shaft 23 which is not in engagement with the rolling member 22, i.e. which is not within the hollow cavity defined by the rolling member 22 and engaged by the remaining portion of the central shaft 23 (Figure 3b).

Advantageously, the central shaft 23 is fixed to the holder 17 via the pin 19 engaging the recess 18.

The first holder seat 20 has a first axis A and the second holder seat 21 has a second axis B (Figure 4).

The central shaft 23 engages the first holder seat 20 axially with respect to the first axis A.

The pin 19 engages the second holder seat 21 axially with respect to the second axis B.

Opportunely, the second axis B is transversal, and preferably orthogonal, to the first axis A.

The recess 18 extends on the central shaft 23 transversally, and in particular orthogonally, to the first axis A and parallel to the second axis B (Figures 3b and 4).

Accordingly, the pin 19 defines, by engagement with the recess 18 along (a direction parallel to) the second axis B, a locking element for preventing an axial extraction of the central shaft 23 from the first holder seat 20 along the first axis A, thereby fixing the roller assembly 15 to the holder 17.

More precisely, as long as the pin 19 engages the recess 18 (along second axis B), an axial extraction of the central shaft 23 from the first holder seat 17 along the first axis A, and therefore a decoupling of the roller assembly 15 from the holder 17, is prevented.

Thus, there is no threaded connection between the roller assembly 15 and the holder 17, i.e. between the pin 19 and the central shaft 23, but merely a shape matching between the pin 19 and the recess 18.

That is, thanks to the peculiar features of the roller assembly 15 and the holder 17 (i.e. the recess 18, the presence of the first holder seat 20, the second holder seat 21 and the mutual orientation thereof, the pin 19) the coupling between the roller assembly 15 and the holder 17 can be obtained without the need for a threaded connection.

As visible in Figure 3a, the support frame 10 comprises at least one retaining portion 24 for locking the pin 19 in engagement with the recess 18.

In detail, the retaining portion 24 includes a retaining wall 24a and the holder 17 is conveniently positioned and mounted on the support frame 10 such that the retaining wall 24a faces the pin 19 in engagement with the recess 18.

In greater detail, the retaining wall 24a defines a stop or abutment surface which prevents a disengagement of the pin 19 from the recess 18.

More specifically, the retaining portion 24, and specifically the retaining wall 24a, faces the entrance of the second holder seat 21.

That is, the retaining wall 24a is transversal, and preferably orthogonal, to the second axis B.

In particular, the pin 19 includes a longitudinal axis C which is parallel, and in particular coaxial and correspondent, when pin 19 engages the second holder seat 21, to the second axis B.

Accordingly, the retaining wall 24a is conveniently transversal, and preferably orthogonal, to the longitudinal axis C.

In light of the above, retaining wall 24a defines an abutment plane or an abutment surface which is orthogonal to pin 19 and which is arranged so as to prevent pin 19 to be extracted from the second holder seat 21, when the holder 17 is mounted to the support frame 10 and due to the positioning of the holder 17 with respect to the support frame 10, thereby preventing the pint 19 from being disengaged from the recess 18.

This configuration is shown in Figures 2b and 3a.

In this way, there is no need for a threaded connection or for a complicated locking mechanism for preventing the disengagement of the pin 19 from the recess 18, and thus the decoupling of the roller assembly 15 from the holder 17.

As visible in Figure 2a, the roller assembly 15 and the pin 19, and therefore part of the holder 17, are located within the operative area 12.

This is necessary in order to support the packaging material advancing therethrough during the induction heating.

Advantageously, the roller assembly 15 and/or the pin 19 comprise, and optionally are made of, non-magnetic material.

Preferably, the roller assembly 15 and/or the pin 19 comprise (are made of) a plastic material, such as polyetheretherketone (PEEK).

Conveniently, also the holder 17 comprises, e.g. is made of, non-magnetic material, preferably a plastic such as polyetheretherketone (PEEK).

Conveniently, also the support frame 10, or at least the aforementioned retaining portion 24 thereof, comprises (is made of) non-magnetic material, preferably PEEK.

In this way, the aforementioned components comprising non-magnetic material and which are arranged, in use, within operative area 12, do not hinder or disturb the electromagnetic induction field generated by the inductor device 11, thereby resulting in a more effective induction heating of the conductive layer of the packaging material.

In light of the above, the central shaft 23 and/or the rolling member 22 comprise (are made of) non-magnetic material, preferably plastic material.

In one advantageous embodiment, the central shaft 23 comprises (is made of) a first non-magnetic material and the rolling member 22 comprises (is made of) a second non-magnetic material different from the first non-magnetic material.

In this way, the wear of these two components is reduced.

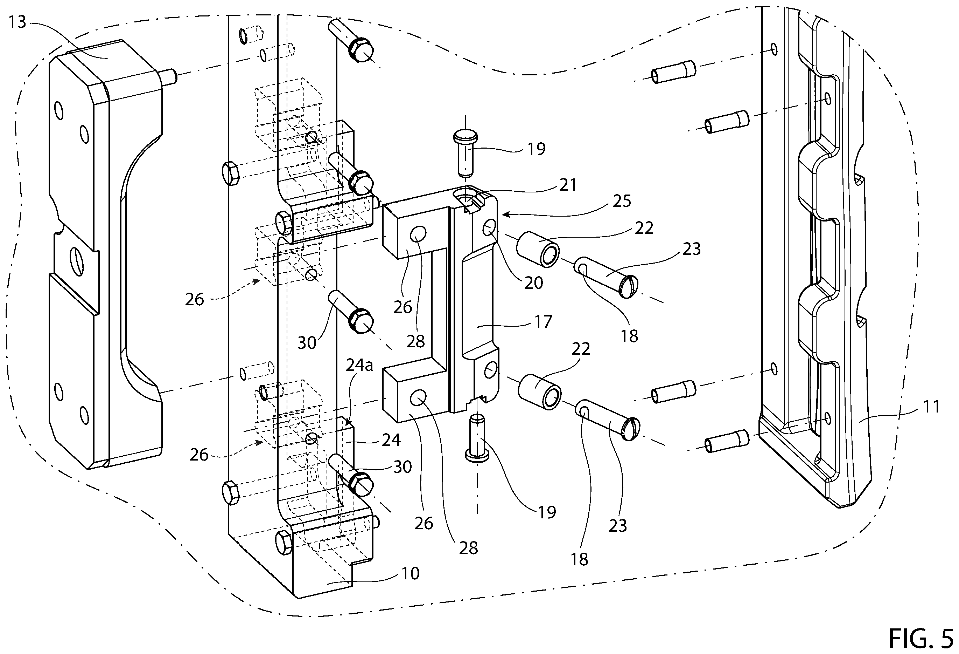

As shown in Figures 3a, 3b and 5, the holder 17 includes a first portion 25 to which the roller assembly 15 is fixed and a second portion 26 fixed to the support frame 10.

In detail, the first portion 25 also includes the first holder seat 20 and the second holder seat 21.

Thus, the first holder seat 20 and the second holder seat 21 are located at the first portion 25, which then defines a coupling portion of the holder 17.

Appropriately, the pin 19 and the central shaft 23 are coupled to such first portion 25.

According to a further important aspect of the present invention, the second portion 26 is located outside of the operative area 12.

That is, the second portion 26 is located outside of the operative area 12 in use and/or in the assembled configuration of sealing system 8, i.e. when the holder 17 is mounted to support frame 10 in its final and operative position.

As visible in Figures 3a and 4, the support frame 10 has a receiving seat 27.

The second portion 26 of the holder 17 engages in coupling the receiving seat 27.

Opportunely, also the receiving seat 27 is located outside of the operative area 12.

In the preferred embodiment shown, the holder 17 comprises two second portions 26 and appropriately the support frame 10 comprises two receiving seats 27.

This configuration increases the robustness of the coupling and improves the correct positioning of the holder 17.

According to the invention, the second portion 26 is fixed to the support frame 10 by at least one metallic fastening element 30, preferably made of stainless steel.

Opportunely, the holder 17 has a slot or hole 28 at its second portion 26, the holder including a hollow metallic insert 29 located at (i.e. within) the slot or hole 28 and receiving in fixed coupling the fastening element 30.

In light of the above, since the holder 17 is fixed to the support frame 10 by a second portion 26 located outside the operative area 12, a metallic fastening element 30 can be used for such fixing, without hindering or disturbing the electromagnetic induction field generated by the inductor device 11.

Therefore, a robustness of the coupling of the holder 17 which is tightened with metallic fastening elements 30 to the support frame 10 is obtained, which has several advantages, such as maintaining the desired positioning of the roller assembly 15 throughout the packaging operation, thereby resulting in a better induction heating, and also reducing the risk that the holder 17 may be detached from the support frame 10.

In one embodiment, the second portion 26 is fixed to the receiving seat 27 by a metallic screw, in particular a stainless steel screw, which then defines the fastening element 30.

Accordingly, in such embodiment, the metallic insert 29 presents a threaded inner surface for defining a threaded connection with the fastening element 30 in form of metallic screw.

The robustness of the fixing of the holder 17 to the support frame 10 is thereby further improved, since a robust and strong threaded connection between metallic parts can be used.

Preferably, the slot or hole 28 is defined by a circular through hole. In this way, the centering of the holder 17, and therefore of the roller assembly 15 is highly simplified and easily guaranteed.

The assembly of the roller assembly 15 to the holder 17 and of the holder 17 to the support frame 10 will be described hereinafter, with the aid of Figure 5.

Firstly, the central shaft 23 engages the rolling element 22 and then is inserted in first holder seat 20.

Conveniently, a free end of the central shaft 23 comprises an indicator element 50 (Figure 3b), such as a screwdriver cut, which is representative of the orientation of the recess 18. By correctly arranging the indicator element 50, the desired position of the recess 18 within the first holder seat 20 and the second holder seat 21 can be ensured.

Secondly, the pin 19 is inserted within the second holder seat 21 and in such a way that the pin 19 engages the recess 18 on the central shaft 23. The central shaft 23 is thereby locked within the first holder seat 20.

Then, the second portions 26 of the holder 17 are inserted in the respective receiving seats 27 of the support frame 10.

By means of this last step, the holder 17 is positioned relatively to the support frame 10 such that the retaining wall 24a faces the pin 19, thereby preventing the extraction of the pin 19 from the second holder seat 21 and the disengagement of the pin 19 from the recess 18.

The roller assembly 15 is therefore firmly coupled to the holder 17 without any threaded connection and merely by using shape matching.

Then, each second portion 26 is fixed to the support frame 10 by a respective metallic fastening element 30.

In this way, the holder 17 is firmly secured to the support frame 10.

The advantages of sealing system 8 according to the present invention will be clear from the foregoing description.

In particular, since the holder 17 is fixed to the support frame 10 by a second portion 26 located outside the operative area 12, a metallic fastening element 30 can be used for such fixing, without hindering or disturbing the electromagnetic induction field generated by the inductor device 11.

Therefore, a robustness of the coupling of the holder 17 which is tightened with metallic fastening elements 30 to the support frame 10 is obtained, which has several advantages, such as maintaining the desired positioning of the roller assembly 15 throughout the packaging operation, thereby resulting in a better induction heating, and also reducing the risk that the holder 17 may be detached from the support frame 10.

This aspect also eases the assembly of the sealing system 8, since non-magnetic, e.g. plastic, fastening elements are delicate and difficult to assemble with the right tightening: if tightened too loose, the risk of detaching increases; if tightened too strong, the risk of breaking the fastening elements increases.

These disadvantages are overcome by the fact that metallic fastening elements 30 can now be used.

Moreover, since no threaded connection is used to fix the roller assembly 15 to the holder 17, the maintenance of the sealing system 8 is significantly simplified.

It is in fact sufficient to untighten the fastening elements 30 and extract the second portion 26 from the receiving seat 27 to allow the extraction of the pin 19 from the second holder seat 21, thereby freeing the extraction of the central shaft 23 from the first holder seat 21. This operation is largely eased with respect to a threaded connection between the roller assembly 15 and the holder 17.

Moreover, such hypothetical threaded connection between the roller assembly 15 and the holder 17 would have to be obtained by means of non-magnetic screws, which would present the disadvantages listed above.

Conversely, thanks to the configuration of sealing system 8 according to the invention, only components made of non-magnetic material(s) are present in the operative area 12, thereby strongly limiting, and in particular eliminating, the hindering and disturbances of the electromagnetic induction field generated by the inductor device 11.

In summary, the assembly of the roller assemblies 15 to the holders 17 and of the holders 17 to the support frame 10 is eased and made more robust and effective, without compromising the efficacy of the electromagnetic induction field generated.

Clearly, changes may be made to sealing system 8 as described herein without, however, departing from the scope of protection as defined in the accompanying claims.

## Claims

1. Sealing system (8) for a packaging machine (1) configured to produce packages (2) containing a pourable product starting from a web (4) of packaging material including a conductive layer made of an electrically conductive material and adapted to be progressively folded into a tube (3), the sealing system (8) being configured to longitudinally seal the tube (3) and comprising:
- a support frame (10);
- an inductor device (11) configured to produce an electromagnetic induction field at an operative area (12) for inducing a current in the conductive layer;
- at least one roller assembly (15) configured for supporting the packaging material during the induction-heating;
- at least one holder (17) configured for mechanically coupling the roller assembly (15) to the support frame (10), the roller assembly (15) being mounted to the holder (17);
wherein the roller assembly (15) comprises a recess (18) and the holder (17) includes a pin (19) configured to engage the recess (18) for fixing the roller assembly (15) to the holder (17).

2. Sealing system (8) as claimed in the previous claim, wherein the holder (17) includes a first holder seat (20) and a second holder seat (21), the roller assembly (15) being mounted to the holder (17) by engaging the first holder seat (20) and the pin (19) engages the second holder seat (21), the first holder seat (20) and the second holder seat (21) interpenetrating one another so that:
- the recess (18) is located both in the first holder seat (20) and in the second holder seat (21);
- the pin (19) engages partially the first holder seat (20) for engaging said recess (18).

3. Sealing system (8) as claimed in any of the previous claims, wherein the roller assembly (15) comprises a hollow rolling member (22) and a central shaft (23) which engages the rolling member (22) thereby carrying the rolling member (22), the rolling member (22) rotatable with respect to the central shaft (23), the recess (18) being obtained on the central shaft (23), the central shaft (23) being fixed to the holder via the pin (19) engaging the recess (18).

4. Sealing system (8) as claimed in claim 2 and 3, wherein the first holder seat (20) has a first axis (A) and the second holder seat (21) has a second axis (B) which is transversal to the first axis (A);
the central shaft (23) engaging the first holder seat (20) axially with respect to the first axis (A), the pin (19) engaging the second holder seat (21) axially with respect to the second axis (B);
the recess (18) extending on the central shaft (23) transversally to the first axis (A) and parallel to the second axis (B);
the pin (19) defining, by engagement with the recess (18) along the second axis (B), a locking element for preventing an axial extraction of the central shaft (23) from the first holder seat (20) along the first axis (A), thereby fixing the roller assembly (15) to the holder (17).

5. Sealing system (8) as claimed in any one of the foregoing claims, wherein the roller assembly (15) and/or the pin (19) comprise, preferably are made of, a non-magnetic material.

6. Sealing system (8) as claimed in claim 3 or 4, wherein the central shaft (23) and/or the rolling member (22) comprise non-magnetic materials, preferably the central shaft (23) comprising a first non-magnetic material and the rolling member (22) comprising a second non-magnetic material different from the first non-magnetic material.

7. Sealing system (8) as claimed in any one of the foregoing claims, wherein the support frame (10) comprises at least one retaining portion (24) for locking the pin (19) in engagement with the recess (18).

8. Sealing system (8) as claimed in the previous claim, wherein the retaining portion (24) includes a retaining wall (24a), the holder (17) being positioned and mounted on the support frame (10) such that the retaining wall (24a) faces the pin (19) in engagement with the recess (18), the retaining wall (24a) defining a stop or abutment surface preventing a disengagement of the pin (19) from the recess (18).

9. Sealing system (8) as claimed in the previous claim, wherein the pin (19) has a longitudinal axis (C), the retaining wall (24a) being transversal, and preferably orthogonal, to said longitudinal axis (C).

10. Sealing system (8) as claimed in any one of the foregoing claims, wherein the support frame (10) has a receiving seat (27) located outside of said operative area (12), said second portion (26) of the holder (17) engaging in coupling the receiving seat (27).

11. Sealing system (8) as claimed in any one of the foregoing claims, wherein the second portion (26) of the holder (17) is fixed to the support frame (10) by at least one metallic fastening element (30), preferably made of stainless steel.

12. Sealing system (8) as claimed in the previous claim, wherein the holder (17) has a slot or hole (28) at its second portion (26), the holder (17) including a hollow metallic insert (29) located at the slot or hole (28) and receiving in fixed coupling the fastening element (30).

13. Sealing system (8) as claimed in the previous claim, wherein the fastening element (30) is defined by a metallic screw and the metallic insert (29) presents a threaded inner surface for defining a threaded connection with the screw.

14. Sealing system (8) as claimed in any one of the previous claims, wherein the holder (17) includes a first portion (25) to which the roller assembly (15) is fixed and a second portion (26) fixed to the support frame (10), the second portion (26) being located outside of said operative area (12).

15. Packaging machine (1) configured to produce packages (2) containing a pourable product starting from a web (4) of packaging material including a conductive layer made of an electrically conductive material, the packaging machine (1) comprising:
- a conveying device for advancing the web (4);
- a web folding device (5) for folding the web (4) into a tube (3);
- a sealing system (8) as claimed in any one of the foregoing claims and configured for longitudinally sealing the tube (3).
